Europäisches Patentamt

European Patent Office

Office européen des brevets

(19)

(11) **EP 1 482 287 A1**

(12) **EUROPÄISCHE PATENTANMELDUNG**

(43) Veröffentlichungstag:
01.12.2004 Patentblatt 2004/49

(51) Int Cl.⁷: **G01J 3/45**, G01B 9/02

(21) Anmeldenummer: 03405373.6

(22) Anmeldetag: 26.05.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **ABB RESEARCH LTD.**
**8050 Zürich (CH)**

(72) Erfinder:
• **Bohnert, Klaus**
**5452 Oberrohrdorf (CH)**

• **Brändle, Hubert**
**8102 Oberengstringen (CH)**
• **Frank, Andreas**
**8037 Zürich (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Polarisations-Fourier-Spektrometer**

(57) Das Polarisations-Fourier-Transform-Spektrometer weist zur Erzeugung eines Wegunterschiedes zwischen zwei Teilstrahlen unterschiedlicher Polarisation mindestens eine doppelbrechende planparallele Platte (5) auf, welche dreh- oder kippbar gelagert ist. Durch die Drehung oder Kippung der planparallele Platte (5) wird eine Änderung des Einfallswinkels $\alpha$ erzeugt, so dass der genannte Wegunterschied hervorgerufen wird. Als Absorptionsspektrometer weist das Spektrometer einen polychromatischen Lichterzeuger (1), einen Kollimator (2a), eine Probe (3) und einen Polarisator (4a) auf. Während der Veränderung des Wegunterschiedes wird von einem Detektor (7) die Intensität von Licht (L) gemessen, das die mindestens eine planparallele Platte (5) und einen Analysator (4b) durchlaufen hat. Aus dem so entstehenden Interferogramm wird in einer Signalverarbeitung (8) mittels FourierTransformation das Spektrum der Probe (3) bestimmt. Das Spektrometer ist einfach und robust, und es werden zeitaufgelöste Messungen ermöglicht.

Fig. 1

**Beschreibung**

Technisches Gebiet

Die Erfindung bezieht sich auf das Gebiet der Spektroskopie, insbesondere der Fourier-Transform-Spektroskopie. Sie bezieht sich auf ein Fourier-Transform-Spektrometer gemäss dem Oberbegriff des Patentanspruches 1 und auf ein Spektroskopie-Verfahren gemäss dem Oberbegriff des Patentanspruches 11.

Stand der Technik

Fourier-Transform-Spektrometer (FTS) werden beispielsweise zur qualitativen und quantitativen Bestimmung von chemischen Zusammensetzungen eingesetzt. Gewöhnlich wird dabei das Absorptionsspektrum einer zu analysierenden Probe im infraroten Wellenlängenbereich gemessen. Herkömmliche FTS entsprechen im wesentlichen einem Michelson-Interferometer. Dieses weist zwei Arme auf. Das zu messende optische Spektrum wird über eine Fourier-Transformation aus dem Interferogramm des zu analysierenden Lichts bestimmt. Das Interferogramm ist die Lichtintensität der beiden interferierenden Teilstrahlen des Interferometers in Abhängigkeit ihres Wegunterschiedes, welcher durch die unterschiedliche Weglänge in den beiden Armen des FTS einstellbar ist. Die spektrale Auflösung eines FTS wird im allgemeinen in cm$^{-1}$ angegeben und beträgt 1 /$\Delta$s, wobei $\Delta$s den maximalen Wegunterschied in cm darstellt. In der Praxis kann man mit Wegunterschieden bis in den Bereich von 1 m arbeiten, womit ausserordentlich hohe Auflösungen erreicht werden.

Grundlagen und weitere Details zur Fourier-Transform können beispielsweise dem Buch P.R. Griffiths,"Chemical infrared Fourier transform spectroscopy", John Wiley, New York 1975 und der Veöffentlichung E.V. Loewenstein, "The history and current status of Fourier transform spectroscopy", Appl. Optics, 5, 845, 1966 entnommen werden.

In der Patentschrift US 5 157 458 ist ein einarmiges FTS beschrieben. Statt den optischen Wegunterschied zwischen zwei verschiedenen Armen des FTS zu verändern, wird in dem einarmigen FTS der optische Wegunterschied zwischen zwei sich im wesentlichen parallel zueinander ausbreitenden Lichtstrahlen unterschiedlicher linearer Polarisation variiert. Dazu beinhaltet das einarmige Polarisations-FTS zwei keilförmige doppelbrechende Kristalle, die gegeneinander bewegbar angeordnet sind. Diese optischen Keile sind derart geformt und angeordnet, dass sie sich ungefähr zu einem Quader ergänzen, wobei die gegenseitige Verschiebung der Keile entlang zweier sich gegenüberstehender und parallel zueinander angeordneter Flächen der Keile stattfindet. Zur Polarisation des Lichtes beinhaltet das FTS zwei Polarisatoren, von denen einer als Analysator wirkt. Ebenfalls im Lichtweg angeordnet ist ein als Kompensator wirkender planparalleler doppelbrechender Kristall, durch welchen ein konstanter Wegunterschied zwischen den orthogonalen Polarisationen eingeführt wird, so dass der gesamte Wegunterschied sich beim Verschieben der beiden Keile beispielsweise zwischen Null und einem Maximalwert verändert.

Als "Berek-Kompensator" ist seit mindestens 1913 (M. Berek, Zbl. Miner. Geol. Paläont. (1913), 388, 427, 464, 580) eine doppelbrechende planparallele Platte bekannt, die als Phasenkompensator eingesetzt wird. Eine solche Platte wird in den Lichtweg eines monochromatischen Lichtstrahles gebracht, um einen Polarisationszustand dieses Lichtstrahles zu verändern, so dass eine gewünschte Polarisation, beispielsweise zirkulare Polarisation, des Strahles erreicht wird. Die mittels eines Berek-Kompensators erzeugte Phasenverschiebung zwischen den polarisierten Lichtstrahlen liegt in der Regel im Bereich zwischen 0 und 2$\pi$, entsprechend einem Wegunterschied von maximal einer Wellenlänge des monochromatischen Lichtes. Für einen Phasenkompensator bedarf es keiner grösseren Phasenverschiebungen als 2$\pi$.

Darstellung der Erfindung

Es ist Aufgabe der Erfindung, ein Spektrometer der eingangs genannten Art sowie ein entsprechendes Verfahren zur Bestimmung eines optischen Spektrums zu schaffen, welches eine Alternative zu den bekannten Spektrometern und Spektroskopieverfahren darstellt. Insbesondere soll ein Fourier-Transform-Spektrometer (FTS) geschaffen werden, welches einen vereinfachten optischen Aufbau aufweist.

Diese Aufgabe löst ein Spektrometer mit den Merkmalen des Patentanspruches 1 sowie ein Verfahren zur Bestimmung eines optischen Spektrums mit den Merkmalen des Patentanspruches 1 1 .

Ein erfindungsgemässes Spektrometer umfasst

- eine Lichtquelle zur Erzeugung eines einen Lichtweg beschreibenden Lichtstrahles aus kollimiertem polychromatischen Licht, aufweisend zwei Teilstrahlen orthogonaler linearer Polarisationen,
- mindestens ein erstes doppelbrechendes Element mit einer Eintrittsfläche und einer zu der Eintrittsfläche parallelen Austrittsfläche, wobei der Lichtstrahl mit der Flächennormalen der Eintrittsfläche einen Einfallswinkel $\alpha$ einschliesst,

- einen als Analysator wirkenden Polarisator, welcher auf dem Lichtweg nach dem mindestens einen ersten doppelbrechenden Element angeordnet ist, und
- eine Detektions-Auswerte-Einheit zur Detektion des Lichtes, zur Erzeugung eines Interferogramms durch Messung der Intensität des Lichtes als Funktion eines Wegunterschiedes Δs zwischen den zwei Teilstrahlen und zur Bestimmung eines Spektrums mittels einer Fourier-Transformation des Interferogramms.

Das erfindungsgemässe Spektrometer kennzeichnet sich dadurch, dass mindestens ein Mittel zur Veränderung des Einfallswinkels α vorgesehen ist.

Bei dem erfindungsgemässen Verfahren zur Bestimmung eines optischen Spektrums wird ein Lichtstrahl parallelen polychromatischen Lichts, aufweisend zwei Teilstrahlen unterschiedlicher linearer Polarisationen erzeugt, wobei mindestens ein erstes doppelbrechendes Element, welches eine Eintrittsfläche sowie eine zu der Eintrittsfläche parallele Austrittsfläche aufweist, von dem Lichtstrahl durchstrahlt wird, wobei von dem Lichtstrahl und der Flächennormale der Eintrittsfläche ein Einfallswinkel α eingeschlossen wird, wobei von dem Lichtstrahl nach Austritt aus der Austrittsfläche ein als Analysator wirkender Polarisator durchlaufen wird, und wobei mittels einer Detektions-Auswerte-Einheit

- der Lichtstrahl nach Austritt aus dem als Analysator wirkenden Polarisator detektiert wird,
- ein Interferogramm erzeugt wird, indem die detektierte Intensität des Lichtstrahles als Funktion eines Wegunterschiedes Δs zwischen den zwei Teilstrahlen gemessen wird, und
- das optische Spektrum bestimmt wird, indem das Interferogramm fourier-transformiert wird.

Das erfindungsgemässe Verfahren ist dadurch gekennzeichnet, dass der Einfallswinkel α verändert wird, und dass durch die Veränderung des Einfallswinkels α der Wegunterschied Δs verändert wird.

Dadurch wird es möglich, ein FTS mit vereinfachtem Aufbau zu realisieren. Eine planparallele Platte kann als doppelbrechendes Element zur Erzeugung eines Wegunterschiedes Δs zwischen Teilstrahlen unterschiedlicher Polarisation dienen, wobei der Wegunterschied Δs durch die Veränderung des Einfallswinkels α erzeugt werden kann. Der Wegunterschied Δs ergibt sich einerseits aus unterschiedlich langen geometrischen Wegen, die von den Teilstrahlen zurückgelegt werden und andererseits dadurch, dass sich die Teilstrahlen aufgrund der Doppelbrechung mit unterschiedlichen Geschwindigkeiten in dem doppelbrechende Element ausbreiten. Ein kollimierter Lichtstrahl, der ein planparalleles doppelbrechendes Element durchstrahlt, bleibt kollimiert, so dass ein Interferogramm erzeugbar ist. Ein entsprechendes FTS ist mechanisch robust und kompakt ausführbar, so dass es flexibel einsetzbar ist. Ein geeignetes Mittel zur Veränderung des Einfallswinkels kann eine rasche und gegebenenfalls periodische Änderung des Einfallswinkels und somit des Wegunterschiedes Δs erlauben, so dass eine rasch aufeinanderfolgende Reihe von Messungen stattfinden kann, so dass zeitaufgelöste Messungen ermöglicht werden.

In einer vorteilhaften Ausführungsform der Erfindungsgegenstandes weist das doppelbrechende Element einen uniaxialen Kristall auf, dessen optische Achse senkrecht zu der Eintrittsfläche ausgerichtet ist. Dadurch wird ein einfacher Strahlengang realisiert, und der Zusammenhang zwischen dem Wegunterschied Δs und dem Einfallswinkel α ist einfach zu berechnen.

In einer bevorzugten Ausführungsform des Erfindungsgegenstandes ist das doppelbrechende Element mittels des Mittels zur Veränderung des Einfallswinkels α kippbar oder drehbar. Insbesondere ist das doppelbrechende Element um eine Drehachse kippbar oder drehbar, welche vorzugsweise senkrecht zu dem Lichtstrahl und/oder parallel zu der Eintrittsfläche ausgerichtet ist. Dadurch wird ein einfacher Strahlengang realisiert.

In einer besonders vorteilhaften Ausführungsform weist das Spektrometer mindestens ein zweites doppelbrechendes Element auf. Mittels des zweiten doppelbrechenden Elementes kann einerseits ein grösserer Wegunterschied Δs erzielt werden, aber andererseits auch ein seitlicher Versatz der Teilstrahlen, welcher beim Durchlaufen des ersten doppelbrechenden Elementes entsteht, ganz oder teilweise kompensiert werden. Dadurch wird ein optimaler Interferenzkontrast erreicht. Besonders vorteilhaft kann dann das zweite doppelbrechende Element die gleichen optischen Eigenschaften wie das erste doppelbrechende Element aufweisen.

In einer besonders bevorzugten Ausführungsform mit zwei doppelbrechenden Elementen sind diese im Lichtweg spiegelsymmetrisch angeordnet. Wenn die doppelbrechenden Elemente jeweils um eine Drehachse kippbar oder drehbar sind, sind diese Drehachsen ebenfalls bezüglich derselben Symmetrieebene spiegelsymmetrisch angeordnet, und die Kipp- oder DrehBewegungen weisen entgegengesetzten Drehsinn auf, so dass der Einfallswinkel α entgegengesetzt gleich gross ist wie ein Einfallswinkel α' des Lichtstrahles für das zweite doppelbrechende Element , also α' = -α. Die doppelbrechenden Elemente können auch um dieselbe Drehachse kippbar sein, wobei auch dann vorteilhaft die Drehsinne der zwei doppelbrechenden Elemente um diese Drehachse entgegengesetzt sind. Ein wesentlicher Vorteil eines derartigen Spektrometers ist, dass ein seitlicher Versatz der zwei Teilstrahlen, den diese zwischen den zwei doppelbrechenden Elemenen aufweisen, voll kompensierbar ist.

In einer weiteren bevorzugten Ausführungsform mit zwei doppelbrechenden Elementen sind diese mittels des Mittels zur Veränderung des Einfallswinkels $\alpha$ nach Art einer Stimmgabel in gegenphasige Schwingungen versetzbar. Dadurch ist auf effiziente Weise eine vorteilhafte spiegelsymmetrische Bewegung der doppelbrechenden Elemente und eine entsprechende entgegengesetzte Änderung der Einfallswinkel $\alpha,\alpha'$ erzielt. Ausserdem sind durch die auf diese Weise realisierte periodische Änderung der Einfallswinkel $\alpha,\alpha'$ und entsprechend realisierte periodische Änderung des Weglängenunterschiedes $\Delta s$ zeitaufgelöste Messungen durchführbar. Die Erzeugung der Schwingung kann beispielsweise elektromagnetisch oder mechanisch, beispielsweise über einen Exzenter, erzeugt werden. Selbstverständlich ist ein analoger Aufbau auch mit nur einem doppelbrechenden Element realisierbar.

In einer weiteren bevorzugten Ausführungsform mit zwei doppelbrechenden Elementen sind diese mittels des Mittels zur Veränderung des Einfallswinkels $\alpha$ um jeweils eine Drehachse um unbegrenzte Winkel rotierbar. Vorteilhaft verlaufen die Drehachsen jeweils durch den Schwerpunkt des jeweiligen doppelbrechenden Elementes. Eine solche Drehbewegung ist einfach realisierbar und erlaubt es, Messungen mit hoher Zeitauflösung zu machen. Selbstverständlich ist ein analoger Aufbau auch mit nur einem doppelbrechenden Element realisierbar.

Weitere bevorzugte Ausführungsformen und Vorteile gehen aus den abhängigen Patentansprüchen und den Figuren hervor.

Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:

Fig. 1 ein erfindungsgemässes Spektrometer, schematisch;

Fig. 2a einen Stahlverlauf in einem doppelbrechenden Element mit Einfallswinkel $\alpha = 0°$, schematisch;

Fig. 2b Veranschaulichung der Brechungsindex-Situation des doppelbrechenden Elementes aus Fig. 2a, schematisch;

Fig. 3a einen Stahlverlauf in einem doppelbrechenden Element mit Einfallswinkel ($\alpha \neq 0°$, schematisch;

Fig. 3b Veranschaulichung der Brechungsindex-Situation des doppelbrechenden Elementes aus Fig. 3a, schematisch;

Fig. 4 eine berechnete Kurve für den Zusammenhang zwischen dem "Misch"-Brechungsindex $n'_e$ und dem Einfallswinkel $\alpha$;

Fig. 5 eine berechnete Kurve für den Zusammenhang zwischen dem Wegunterschied $\Delta s$ und dem Einfallswinkel $\alpha$;

Fig. 6 einen Stahlverlauf mit zwei doppelbrechenden Elementen, schematisch;

Fig. 7 Spektrometer mit zwei doppelbrechenden Elementen und einer Kipp-Vorrichtung, schematisch;

Fig. 8 Spektrometer mit zwei drehbaren doppelbrechenden Elementen, schematisch;

Fig. 9 Emissionsspektrometer mit zwei voll rotierbaren doppelbrechenden Elementen, schematisch;

Fig. 10 Spektrometer mit zwei nach Art einer Stimmgabel kippbaren doppelbrechenden Elementen, schematisch;

Fig. 11 Spektrometer mit zwei nach Art einer Stimmgabel kippbaren doppelbrechenden Elementen, schematisch;

Fig. 12a einen Stahlverlauf in einem doppelbrechenden Element mit Einfallswinkel $\alpha = 0°$, schematisch;

Fig. 12b Veranschaulichung der Brechungsindex-Situation des doppelbrechenden Elementes aus Fig. 12a, schematisch;

Fig. 13a einen Stahlverlauf in einem doppelbrechenden Element mit Einfallswinkel $\alpha \neq 0°$, schematisch;

Fig. 13b Veranschaulichung der Brechungsindex-Situation des doppelbrechenden Elementes aus Fig. 13a, schematisch;

Fig. 14a einen Stahlverlauf in einem zweiachsigen doppelbrechenden Element mit Einfallswinkel $\alpha = 0°$, schematisch;

Fig. 14b Veranschaulichung der Brechungsindex-Situation des zweiachsigen doppelbrechenden Elementes aus Fig. 14a, schematisch;

Fig. 14c Veranschaulichung der Brechungsindex-Situation für die Hauptbrechzahlen des zweiachsigen doppelbrechenden Elementes aus Fig. 14a, schematisch;

Fig.15a einen Stahlverlauf in einem zweiachsigen doppelbrechenden Element mit Einfallswinkel $\alpha \neq 0°$, schematisch;

Fig. 15b Veranschaulichung der Brechungsindex-Situation des zweiachsigen doppelbrechenden Elementes aus Fig. 15a, schematisch;

Fig. 15c Veranschaulichung der Brechungsindex-Situation für die Hauptbrechzahlen des zweiachsigen doppelbrechenden Elementes aus Fig. 1 5a, schematisch;

Die in den Zeichnungen verwendeten Bezugszeichen und deren Bedeutung sind in der Bezugszeichenliste zusammengefasst aufgelistet. Grundsätzlich sind in den Figuren gleiche oder zumindest gleichwirkende Teile mit gleichen Bezugszeichen versehen. Die beschriebenen Ausführungsbeispiele stehen beispielhaft für den Erfindungsgegenstand und haben keine beschränkende Wirkung.

Wege zur Ausführung der Erfindung

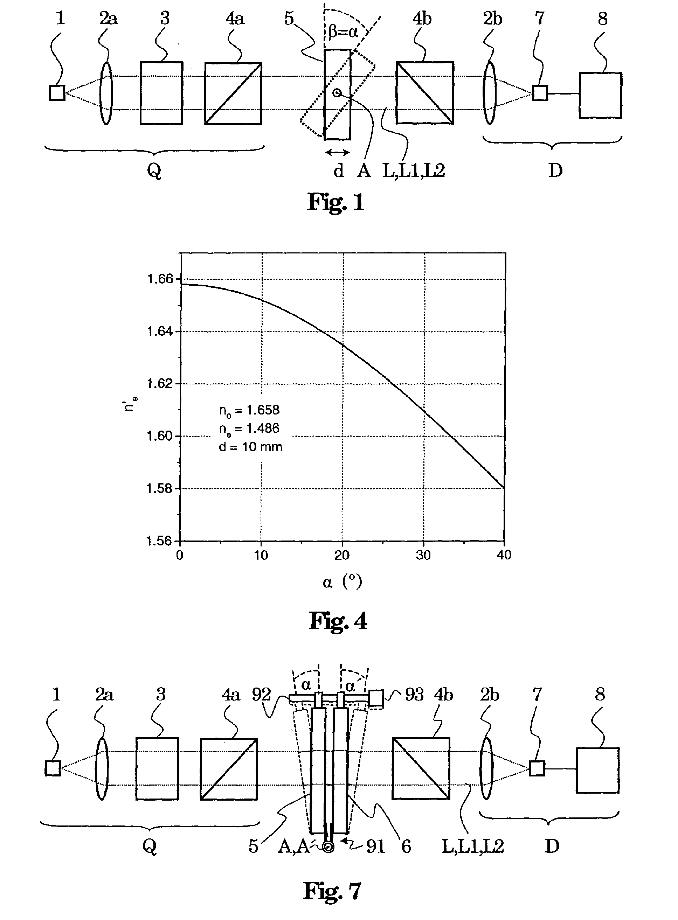

Fig. 1 zeigt schematisch ein erfindungsgemässes Spektrometer. Das Fourier-Transform-Spektrometer (FTS) weist eine Lichtquelle Q, ein erstes doppelbrechendes Element 5, einen als Analysator 4b wirkenden Polarisator 4b und eine Detektions-Auswerte-Einheit D auf. Die Lichtquelle Q dient der Erzeugung eines einen Lichtweg L beschreibenden Lichtstrahles L aus parallelem polychromatischen Licht L und aufweisend zwei Teilstrahlen L1,L2 unterschiedlicher linearer Polarisationen, deren Polarisationsrichtungen zueinander orthogonal sind. Die Lichtquelle Q umfasst in Fig. 1 einen Lichterzeuger 1, einen Kollimator 2a, eine Probe 3 und einen ersten Polarisator 4a. Der Lichterzeuger 1 kann vorteilhaft ein thermischer Strahler sein. Vorteilhaft ist die Fläche, aus der das Licht emittiert wird, von geringer Ausdehnung gegenüber der Ausdehnung des Kollimators 2a ("punktförmige Lichtquelle"). Der Lichterzeuger 1 ist vorteilhaft im Brennpunkt des Kollimators 2a angeordnet, so dass das Licht den Kollimator 2a als paralleler Lichtstrahl L verlässt. Der kollimierte Lichtstrahl L durchdringt dann eine Probe 3, die vorteilhaft gasförmig oder auch flüssig sein kann. In der Probe 3 werden Lichtwellenlängen absorbiert, die charakteristisch sind für die Probe 3. Das entsprechende optische Spektrum ist dasjenige Spektrum, welches mittels der Fourier-Transformation bestimmt werden kann. Zur Erzeugung linear polarisierten Lichtes L durchläuft der Lichtstrahl L zuvor den ersten Polarisator 4a. Das transmittierte Licht L kann als aus den zwei zueinander orthogonal polarisierten Teilstrahlen L1 ,L2 zusammengesetzt interpretiert werden.

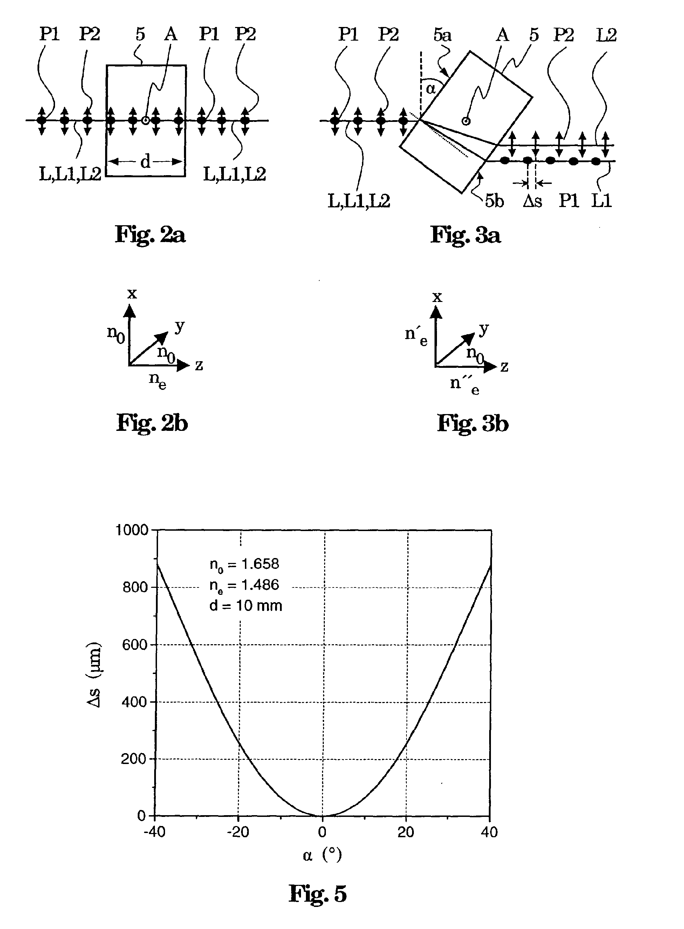

Aufgabe des (ersten) doppelbrechenden Elementes 5 ist es, zwischen diesen zwei Teilstrahlen L1 ,L2 einen veränderbaren Wegunterschied $\Delta s$ zu erzeugen. Dieses erste doppelbrechende Element 5 ist in Fig. 1 eine um eine Drehachse A (schematisch durch Kreis und Punkt dargestellt) drehbar gelagerte planparallele Platte 5 der Dicke d. Die Drehung kann vorteilhaft mittels eines nicht dargestellten Antriebs oder Motors angetrieben werden. Eine physikalisch realisierte Drehachse, gegebenenfalls inklusive eines Antriebes, kann als ein Mittel zur Veränderung des Einfallswinkels $\alpha$ dienen. Die Aufgabe eines Mittels zur Veränderung des Einfallswinkels $\alpha$ ist es, den Einfallswinkel $\alpha$ zu verändern. Die Veränderung des Einfallswinkels $\alpha$ kann vorteilhaft periodisch sein. Die Drehachse A ist in Fig. 1 so ausgerichtet, das sie senkrecht zum Lichtweg L und parallel zu der Eintrittsfläche, vorzugsweise parallel zu einer ausgezeichneten Kristallachse, verläuft. Zudem verläuft sie vorteilhaft durch den Schwerpunkt der planparallelen Platte 5. Der Drehwinkel, um welchen die planparallele Platte gedreht wird, wird als Drehwinkel $\beta$ bezeichnet. In Abhängigkeit von dem Drehwinkel $\beta$ ergibt sich ein Einfallswinkel des Lichtstrahles L beim Eintritt in die planparallele Platte 5, welcher als Einfallswinkel $\alpha$ bezeichnet ist. In Fig. 1 ist der Drehwinkel $\beta$, um welchen die planparallele Platte gedreht wird, gleich gross wie der Einfallswinkel $\alpha$. Gestrichelt dargestellt ist die planparallele Platte 5 in einem um $\beta$ gedrehten Zustand. Im Zusammenhang mit den Figs. 2a, 2b, 3a und 3b wird weiter unten diskutiert, wie der Lichtstrahl L durch die planparallele Platte 5 beeinflusst wird.

Nach Durchlaufen der planparallelen Platte 5 wird das Licht L in dem als Analysator 4b dienenden (zweiten) Polarisator 4b analysiert. Der Polarisator 4b dient als Analysator 4b für die Teilstrahlen unterschiedlicher Polarisation. Die Durchlassrichtung des Analysators 4b ist vorteilhaft um 0°, oder auch um 90°, gegenüber der Durchlassrichtung des ersten Polarisators 4a gedreht. Das so analysierte Licht L wird dann in der Detektions-Auswerte-Einheit D detektiert und ausgewertet.

Dazu weist die Detektions-Auswerte-Einheit D in Fig. 1 einen Kollimator 2b, einen Detektor 7 und eine Signalverarbeitung 8 auf. Der Kollimator 2b fokussiert das Licht L auf den Detektor 7. Der Detektor 7 kann vorteilhaft eine Photodiode oder ein Photomultiplier sein. Auf den Kollimator 2b kann auch verzichtet werden, insbesondere, wenn ein grossflächiger Detektor 7 eingesetzt wird. Die detektierten Lichtintensitäten werden dann der Signalverarbeitung 8 zugeführt, welche vorteilhaft rechnergestützt ist. In der Signalverarbeitung 8 wird aus den in Abhängigkeit von dem Wegunterschied $\Delta s$ gemessenen Lichtintensitäten, welche ein Interferogramm darstellen, mittels einer Fourier-Transformation das optische Spektrum bestimmt. Diverse Möglichkeiten für eine derartige Signalverarbeitung sind dem Fachmann, beispielsweise aus den oben zitierten Schriften von Griffiths oder Loewenstein, bekannt. Damit eine klare und somit sinnvoll weiterverarbeitbare Interferenz am Detektor 7 vorliegt, darf der Lichtstrahl L keine grosse Divergenz aufweisen, sondern soll ausreichend kollimiert sein.

Zur Aufnahme eines Spektrums mittels des dargestellten FTS wird das erste doppelbrechende Element 5 kontinuierlich oder schrittweise gedreht, so dass ein vorgebbarer Bereich von Einfallswinkeln $\alpha$ durchlaufen wird, wodurch sich ein vorgebbarer Bereich von Wegunterschieden $\Delta s$ ergibt. Währenddessen wird die detektierte Lichtintensität gemessen, aus welcher sich das optische Spektrum mittels einer Fourier-Transformation ergibt. Das in Fig. 1 dargestellte FTS kann also als Absorptionsspektrometer für eine Probe 3 eingesetzt werden. Vorteilhaft wird auch ein Spektrum ohne die Probe 3 gemessen, weil sich durch Verhältnisbildung der Spektren mit und ohne Probe 3 besonders einfach und sicher das Absorptionsspektrum der Probe 3 ergibt.

Fig. 2a stellt den Verlauf des Lichtes L im Bereich des doppelbrechenden Elementes 5 schematisch dar. Fig.

2b veranschaulicht die Brechungsindices für die Polarisationsrichtungen in den drei ausgezeichneten Richtungen x, y, z der Indikatrix für das doppelbrechende Element aus Fig. 2a. Die Richtungen x, y, z der Indikatrix fallen im allgemeinen mit Kristallachsen zusammen. Das doppelbrechende Element 5 ist eine planparallele Platte 5, die vorteilhaft aus einem uniaxialen Kristall, beispielsweise Calcit, besteht. Zu den uniaxialen Kristallen zählen die hexagonalen, die tetragonalen und die trigonalen Kristalle. Ein derartiger Kristall weist eine "optische Achse" auf. Sie verläuft hier in z-Richtung. Für linear polarisiertes Licht, das sich entlang dieser optischen Achse ausbreitet, ist die Richtung der linearen Polarisation für die Ausbreitungsgeschwindigkeit des Lichtes egal. Das heisst, dass Licht, das sich entlang dieser optischen Achse ausbreitet, unabhängig von seiner linearen Polarisation, denselben, sogenannten "ordentlichen" Brechungsindex no sieht.

In Fig. 2a breitet sich der die zwei Teilstrahlen L1,L2 umfassende Lichtstrahl L entlang der optischen Achse aus. Die zwei Polarisationen P1,P2 sind als kleine Ovale für die senkrecht zu Papierebene stehende Polarisation P1 von L1 und durch Pfeile für die in der Papierebene liegende Polarisation P2 von L2 dargestellt. Da L1 und L2 denselben Brechungsindex no sehen, ergibt sich kein Wegunterschied zwischen diesen Teilstrahlen nach Durchlaufen der planparallelen Platte 5 in Fig. 2a.

In Fig. 3a hingegen ist der Kristall 5 um die Achse A gedreht, wodurch sich ein Einfallswinkel $\alpha$ ergibt, der von dem 0°-Eintrittwinkel in Fig. 2a abweicht. Der Einfallswinkel $\alpha$ wird zwischen Lichtstrahl und der Flächennormale (gepunktet dargestellt) am Eintrittsort gemessen. Bei der planparallelen Platte 5 ist diese Flächennormale die Flächennormale einer Eintrittsfläche 5a des Kristalls 5. In Fig. 3b veranschaulicht die zu Fig. 3a gehörenden Brechungsindex-Situation. Da sich der Lichtstrahl L im Falle der Fig. 3 nicht entlang der optischen Achse der planparallelen Platte 5 ausbreitet, hängt der Brechungsindex von der Polarisationsrichtung ab. Der Teilstrahl L1 mit der Polarisation P1 sieht immer noch, wie in Fig. 2, den ordentlichen Brechungsindex no. L1 wird darum auch als "ordentlicher Strahl" bezeichnet. Aber der Teilstrahl L2 der Polarisation P2 sieht einen "Misch"-Brechungsindex $n'_e$, welcher von dem Einfallswinkel ($\alpha$, dem ordentlichen Brechungsindex $n_0$ und dem sogenannten "ausserordentlichen" Brechungsindex $n_e$ des Kristalles abhängt. Den "Misch"-Brechungsindex $n'_e$ kann man mittels der sogenannten "Indikatrix" (Index-Ellipsoid) berechnen:

$$\frac{1}{n'_e} = \sqrt{\frac{\cos^2 \alpha}{n_0^2} + \frac{\sin^2 \alpha}{n_e^2}}$$

Mit zunehmendem Einfallswinkel $\alpha$ ändert sich der "Misch"-Brechungsindex $n'_e$ ausgehend von $n_0$ zu $n_e$. Dadurch, dass die zwei Teilstrahlen L1,L2 also unterschiedliche Ausbreitungsgeschwindigkeiten in dem doppelbrechenden Element 5 haben und zudem noch geometrisch unterschiedlich lange Strecken zurücklegen, ergibt sich, dass L1 und L2 nach Durchlaufen des doppelbrechenden Elementes 5 einen Wegunterschied $\Delta$s aufweisen. Ausserdem sind die Teilstrahlen L1,L2 zwar noch parallel, doch sie weisen einen seitlichen Strahlenversatz auf. Indem der Einfallswinkel $\alpha$ variiert wird, wird der Wegunterschied $\Delta$s variiert. Für nicht zu grosse Einfallswinkel $\alpha$ (kleiner als etwa 45°) ergibt sich in guter Näherung:

$$\Delta s(\alpha) = d \cdot \{ n_0 / \cos(\alpha/n_0) - n'_{e/}\cos(\alpha/n'_e) + [\tan(\alpha/n_0) - \tan(\alpha/n'_e)] \cos(\alpha)\}$$

Für den Wegunterschied $\Delta$s sind die Gruppenbrechungsindices massgeblich. Es ist zu beachten, dass $n_0$ und $n_e$ im allgemeinen wellenlängenabhängig sind. Da diese Abhängigkeit in der Regel bekannt ist, kann sie bei der Signalverarbeitung entsprechend berücksichtigt werden. In der obigen Gleichung ist vorausgesetzt, dass die Gruppenbrechungsindices den Phasenindices entsprechen, was streng aber nur im Falle vernachlässigbarer Dispersion gilt.

Beim Betrieb des Spektrometers ist weiter zu beachten, dass die Reflexion und Transmission an den doppelbrechenden Elementen 5,6 gemäss den Fresnel-Gleichungen vom Einfallswinkel $\alpha$ und der Polarisation abhängig sind. Der entsprechende Einfluss auf das Interferogramm kann im Signalprozessor 8 berücksichtigt und entsprechend kompensiert werden. Die genannten Effekte können vorteilhaft mit Hilfe von Antireflexschichten auf den Oberflächen der doppelbrechenden Elemente 5,6 reduziert werden.

In dem FTS gemäss Fig. 1 ist vorteilhaft die Durchlassrichtung des ersten Polarisators 4a unter 45° zu x und y und somit auch unter 45° zu der zu x parallelen Drehachse A ausgerichtet (vergleiche auch Figs. 2 und 3). Die beiden Teilstrahlen L1,L2 haben dann nach Durchlaufen der planparallelen Platte 5 dieselbe Amplitude. Die Durchlassrichtung des Analysators 4b ist vorteilhaft parallel oder senkrecht zu der des ersten Polarisators 4a.

Fig. 4 zeigt eine berechnete Kurve für den Zusammenhang zwischen dem "Misch"-Brechungsindex $n'_e$ und dem Einfallswinkel $\alpha$ für den in den Figs. 1, 2 und 3 dargestellten Fall, wobei Calcit als doppelbrechendes Material der planparallelen Platte 5 und eine Dicke d der Platte 5 von d = 10 mm angenommen ist.

Fig. 5 zeigt eine exakt berechnete Kurve für den Zusammenhang zwischen dem Wegunterschied $\Delta$s und dem Einfallswinkel $\alpha$ für den in den Figs. 1, 2 und 3 dargestellten Fall, wobei Calcit als doppelbrechendes Material der planparallelen Platte 5 und eine Dicke d der Platte 5 von d = 10 mm angenommen ist. Beispielsweise ergibt sich für $\alpha$ = 30° ein Wegunterschied von $\Delta$s = 548 µm.

Der oben im Zusammenhang mit Fig. 3 erwähnte seitliche Versatz der zwei Teilstrahlen L1,L2 nach Durchlaufen der planparallelen Platte 5 kann ganz oder teilweise durch eine weitere planparallele Platte kompensiert werden:

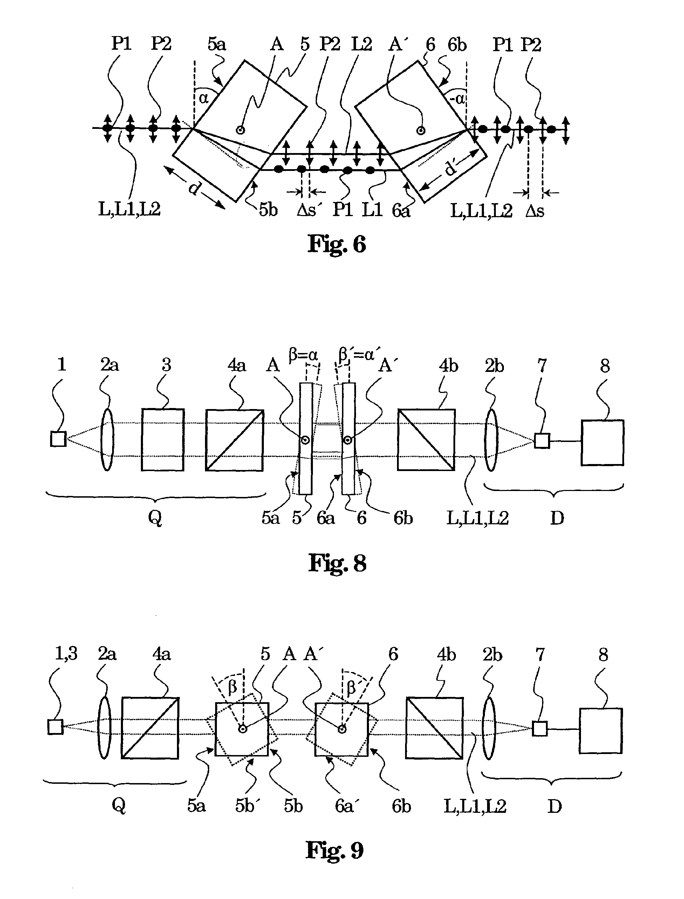

Fig. 6a zeigt, analog zu Fig. 3a, den Verlauf des Lichtes L im Bereich zweier doppelbrechender Elemente 5,6, welche beispielsweise in einem Aufbau gemäss Fig. 1 anstelle des einen (ersten) doppelbrechenden Elementes 5 vorgesehen sind. Die linke Hälfte der Fig. 6 entspricht dem in Fig. 3a dargestellten. Der zwischen den zwei Teilstrahlen L1,L2 unterschiedlicher Polarisationen P1, P2 durch das erste doppelbrechende Element 5 erzeugte Wegunterschied ist als $\Delta$s' bezeichnet, da $\Delta$s den Wegunterschied bezeichnen soll, den die Teilstrahlen L1,L2 am Detektor 7, respektive der Detektions-Auswerte-Einheit D aufweisen. Die planparallele Platte 6 weist vorteilhaft dieselben optischen Eigenschaften und somit auch dieselbe Dicke d' = d auf wie die planparallele Platte 5. Vorteilhaft sind die beiden planparallelen Platten 5,6 zueinander spiegelsymmetrisch angeordnet bezüglich einer zum Lichtstrahl L senkrechten Spiegelebene. Vorteilhaft sind auch die Drehachsen A,A' der beiden planparallelen Platten 5,6 spiegelsymmetrisch angeordnet bezüglich dieser Spiegelebene. Besonders vorteilhaft werden ausserdem noch die Platten derart um ihre Drehachsen A,A'gedreht, dass das Licht L unter entgegengesetzt gleichgrossen Einfallswinkeln $\alpha,\alpha$' einfällt, also $\alpha$' = -$\alpha$'. Auf diese Weise wird der seitliche Versatz der zwei Teilstrahlen L1,L2 vollkommen kompensiert. Und der Wegunterschied $\Delta$s am Detektor ist doppelt so gross wie im Falle nur eines doppelbrechenden Elementes 5 gleicher Art: $\Delta$s = 2 ·$\Delta$s'. Gemäss dem obigen Beispiel (Fig. 5) ergibt sich also $\Delta$s = 1096 µm für $\alpha$ = 30°, so dass die entsprechende Auflösung des Spektometers 9.1 cm$^{-1}$ beträgt. Wellenlängenbezogen beträgt die Auflösung im Spektrum $\delta\lambda = \lambda^2/(2 \cdot \Delta s_{max})$, wobei $\Delta s_{max}$ der maximal erreichte Wegunterschied ist, welcher in dem Beispiel für $\alpha$ = 30° erreicht wird. Für eine Wellenlänge $\lambda$ von 1 µm beträgt die Auflösung $\delta\lambda$ = 0.9 nm.

Fig. 7 zeigt schematisch ein Spektrometer, das teilweise dem in Fig. 1 dargestellten Spektrometer entspricht und ausgehend davon beschrieben wird. Statt nur einer planparallelen Platte 5 mit einer Drehachse (und einem nicht dargestellen Antrieb) weist das Spektrometer in Fig. 7 zwei planparallele Platten 5,6 und eine Kipp-Vorrichtung auf. Die in Fig. 7 gezeigte beispielhafte Kipp-Vorrichtung umfasst eine Plattenhalterung 91 mit Drehachse, wodurch beide planparallelen Platten 5,6 um dieselbe Drehachse A=A' dreh- oder kippbar sind, sowie eine Stange 92, welche an einer ersten Hälfte ein Schraubengewinde aufweist, dessen Drehsinn dem Drehsinn eines von einer zweiten Hälfte der Stange 92 aufgewiesenen Schraubengewindes entgegengesetzt ist. Vorteilhaft weisen die beiden Gewinde dieselbe Ganghöhe auf. Die planparallelen Platten 5,6 sind derart mit je einer der genannten Hälften der Stange 92 verbunden, dass sie um entgegengesetzt gleichgrosse Winkel gekippt werden, wenn die Stange gedreht wird. Vorteilhaft ist die Stange 92 mittels eines Antriebs 93 drehbar. Die Plattenhalterung 91, die Stange 92 und der Antrieb 93 können als Bestandteile eines Mittels zur Veränderung des Einfallswinkels aufgefasst werden. Selbstverständlich kann in analoger Weise zu dem in Fig. 7 gezeigten Spektrometer auch ein Spektrometer mit nur einem doppelbrechenden Element 5 realisiert werden. Der Strahlengang nim Bereich der planparallelen Platten 5,6 in einem Spektrometer gemäss Fig. 7 entspricht dem in Fig. 6 dargestellten.

Fig. 8 zeigt schematisch ein weiteres FTS, das teilweise dem in Fig. 1 dargestellten Spektrometer entspricht und ausgehend davon beschrieben wird. Statt nur einer planparallelen Platte 5 mit einer Drehachse (und einem nicht dargestellen Antrieb) weist das Spektrometer in Fig. 8 zwei planparallele Platten 5,6 mit je einer Drehachse A,A' auf. Die Drehachsen verlaufen vorteilhaft durch den Schwerpunkt der jeweiligen planparallelen Platte 5,6. Der Strahlenverlauf entspricht, wie bei Fig. 7, dem in Fig. 6 dargestellen. Aufgrund der Ausrichtung der Drehachsen A,A', der planparallelen Platten 5,6 und des Lichtstrahles L sind auch bei den in Fig. 8 gezeigten Spektrometer der Drehwinkeln $\beta,\beta$' der Kristalle 5,6 gleich den Einfallswinkeln $\alpha,\alpha$' des Lichtes L auf die jeweilige Eintrittsfläche 5a,6a: $\beta = \alpha$ und $\beta$'= $\alpha$'. Vorteilhaft sind die Drehachsen A,A' derart gekoppelt oder eine die Drehung der Achsen A,A' steuernde Steuerung (nicht dargestellt) derart ausgelegt, dass die Einfallswinkel $\alpha,\alpha$' stets entgegengesetzt gleich gross sind ($\alpha$ = -$\alpha$'), wie schon im Zusammenhang mit den Figs. 6 und 7 erläutert wurde.

In Fig. 9 ist eine weitere bevorzugte Ausführungsform der Erfindung dargestellt. Sie entspricht weitgehend der in Fig. 8 dargestellten Ausführungsform und wird ausgehend davon beschrieben. In Fig. 9 sind die zwei doppelbrechenden Elemente 5,6 so ausgebildet und angeordnet, dass sie um unbegrenzt grosse Drehwinkel $\beta,\beta$' drehbar sind. Dadurch können zeitaufgelöste Messungen auf besonders einfache Weise durchgeführt werden, da die doppelbrechenden Elemente 5,6 kontinuierlich in derselben Drehrichtung gedreht werden können, wobei vorteilhaft wieder der Drehsinn des ersten doppelbrechenden Elementes 5 dem Drehsinn des zweiten doppelbrechenden Elementes 6 entgegengesetzt ist. Vorteilhaft sind die beiden doppelbrechenden Elemente 5,6 gleichartig ausgebildet sowie die Anordnung der Elemente 5,6 so gewählt, dass für die Einfallswinkel $\alpha$ = -$\alpha$' gilt. "Zeitaufgelöste Messungen" soll bedeuten, dass in relativ kurzem Zeitabstand mehrere Messungen, also Spektrums-Bestimmungen, hintereinander stattfinden.

Beispielsweise durch Totalreflexion an der Eintrittsfläche 5a beziehungsweise 6a ergibt sich ein begrenzter Drehwinkel-Bereich, in welchem Lichtintensitäten detektierbar sind, die zu sinnvollen Daten (Spektren) führen können.

Darum ist vorteilhaft die Detektions-Auswerte-Einheit D derart ausgelegt, dass nur Lichtintensitäten ausgewertet (fouriert-transformiert) werden, die in solchen Zeitintervallen detektiert werden, in denen die Drehwinkel $\beta,\beta'$ in einem gewünschten, zum Beispiel dem genannten (gegebenenfalls jeweiligen) begrenzten Drehwinkel-Bereich liegen.

Da eine eher dünne planparallele Platte 5 oder 6, wie sie beispielsweise in Fig. 8 dargestellt ist, pro voller Umdrehung ($\beta$-Änderung von 360°) nur zweimal einen sinnvoll auswertbaren Drehwinkel-Bereich überstreicht, können die doppelbrechenden Elemente 5,6 vorteilhaft noch mindestens zwei weitere zueinander parallele Flächen aufweisen, welche derart angeordnet sind, dass sie nach Drehung der doppelbrechenden Elemente 5,6 um einen vorgebbaren Drehwinkel als weitere Eintrittsflächen 5a',6a' und Austrittsflächen 5b',6b' wirken. Der Übersichtlichkeit halber sind nicht alle diese Flächen in Fig. 9 angeschrieben. Die doppelbrechenden Elemente 5,6 in Fig. 9 weisen je eine weitere Eintritts- und eine weitere Austtritsfläche auf, die rechtwinklig zu den anderen Eintritts- beziehungsweise Austrittsflächen angeordnet sind. Viermal pro Vollumdrehung und nach jeweils 90° Umdrehung wird ein anderes Paar von Flächen zur Eintrittsfläche respektive Austrittsfläche. Bevorzugt haben die doppelbrechenden Elemente 5,6 einen quadratischen Querschnitt, wie in Fig. 9 dargestellt. Bei Kristall-Geometrien und Kristall-Orientierungen der doppelbrechenden Elemente 5,6 gemäss den im Zusammenhang mit den Figs. 2 und 3 diskutierten ergeben sich unabhängig davon, ob die Eintrittsflächen 5a,6a oder die weiteren Eintrittsflächen 5a' ,6a' als Eintrittsflächen wirken, dieselben Interferogramme. Werden andere Kristalle oder anders orientierte Kristalle verwendet, ist möglicherweise eine verschiedenartige Auswertung der Lichtintensitäten nötig in Abhängigkeit davon, welche der Flächen 5a,6a;5a',6a'... als Eintrittsfläche wirkt. Selbstverständlich ist auch ein dem in Fig. 9 dargestellten Spektrometer analoges Spektrometer mit nur einem doppelbrechenden Element 5 realisierbar.

Ein weiterer Unterschied zwischen den Spektrometern in Fig. 8 und Fig. 9 ist, dass in Fig. 9 beispielhaft dargestellt ist, wie ein erfindungsgemässes FTS aufgebaut sein kann, wenn es nicht als Absorptionsspektrometer, sondern als Emissionsspktrometer ausgelegt ist. In dem Fall ist die Probe 3 gleichzeitig der Lichterzeuger 1. Da im allgemeinen von einer Probe 3 weder ein kollimierter Lichtstrahl L, noch polarisiertes Licht L emittiert wird, sind im Lichtweg L der Kollimator 2a und der (erste) Polarisator 4a angeordnet.

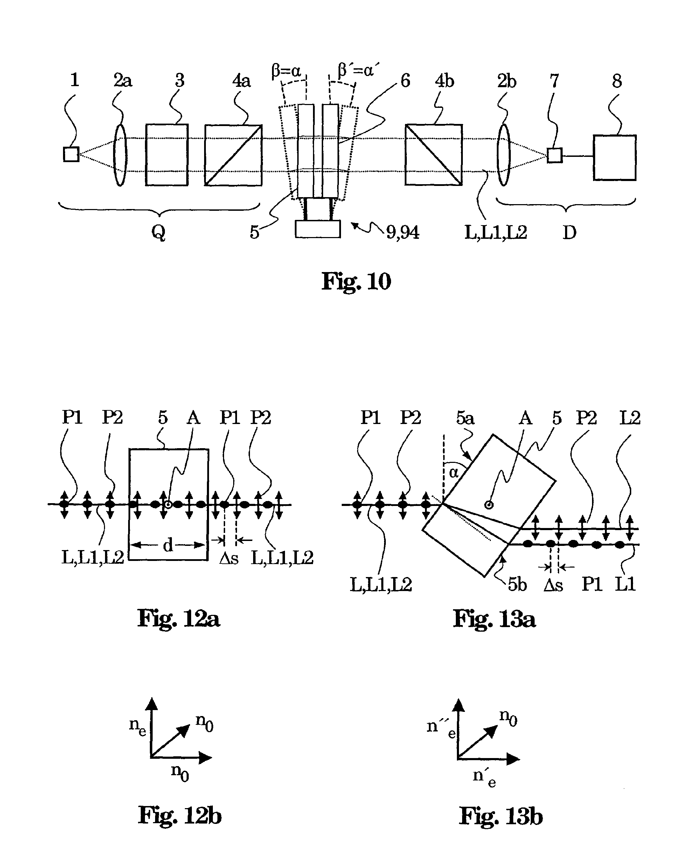

Fig. 10 zeigt schematisch ein Spektrometer mit zwei doppelbrechenden Elementen 5,6 und mit einem Mittel 9 zur Veränderung des Einfallswinkels $\alpha$ nach Art einer Stimmgabel. Der sonstige Aufbau des Spektrometers entspricht im wesentlichen dem in Fig. 8 dargestellten Spektrometer. Das Mittel 9 zur Veränderung des Einfallswinkels $\alpha$ beinhaltet elastische Halterungen und Fixierung 94. Die beiden planparallelen Platten 5,6 sind durch je eine elastische Halterung (dargestellt durch je eine dicke Linie) gehalten, wobei die elastischen Halterungen an der Fixierung fixiert sind. Dadurch sind die Platten 5,6 schwingungsfähig gelagert. Vorteilhaft schwingen die Platten 5,6 gegenphasig, so dass die Einfallswinkel $\alpha,\alpha'$ entgegengesetzt gleich gross sind. Vorteilhaft kann eine solche gegenphasige Schwingung auf elektromagnetischem Wege erzeugt werden (nicht dargestellt). Selbstverständlich ist auch ein dem in Fig. 10 dargestellten Spektrometer analoges Spektrometer mit nur einem doppelbrechenden Element 5 realisierbar.

In Fig. 11 ist beispielhaft veranschaulicht, wie bei einem Spektrometer gemäss Fig. 10 die Verkippung der planparallelen Platten 5,6 mechanisch realisierbar ist. Die schematische Darstellung zeigt, dass das Mittel zur Veränderung des Einfallswinkels $\alpha$ eine elastische Halterung und Fixierung 94 sowie je eine Auslenkstange 95 pro Platte 5,6 und einen Exzenter 96 aufweist. Ein dicker Pfeil deutet an, dass der Exzenter drehbar ist. Wie auch in den anderen Figuren werden auch hier gedrehte oder gekippte Teile durch gestrichelte Darstellung veranschaulicht. Durch eine Drehung des Exzenters werden die Auslenkstangen 95 ausgelenkt, so dass sich der Dreh- oder Kippwinkel $\beta$ beziehungsweise $\beta'$ der Platten 5,6 ändert, wodurch wiederum eine bevorzugt gegenphasige und entgegengesetzt gleichgrosse Veränderung der Einfallswinkel $\alpha,\alpha'$ erreicht wird. Vorteilhaft kann der Exzenter 96 elliptisch geformt sein. In analoger Weise kann auf diese Weise auch ein Spektrometer mit nur einer Platte 5 betrieben werden.

Fig. 12a zeigt in analoger Weise zu Fig. 2a einen Stahlenverlauf in einem doppelbrechenden Element 5 mit Einfallswinkel $\alpha = 0°$. Es wird ebenfalls ein uniaxialer Kristall vorausgesetzt. Aber dessen kristalline Orientierung ist anders gewählt als in Fig. 2a. Fig. 12b veranschaulicht, welcher Brechungsindex welcher Polarisationsrichtung zugeordnet ist. Die optische Achse zeigt in der Papierebene nach oben. Für $\alpha = 0°$ "sieht" Licht L,L1 der Polarisationsrichtung P1 den ordentlichen Brechungsindex no, während Licht L2 der Polarisationsrichtung P2 den ausserordentlichen Brechungsindex ne "sieht". Somit ergibt sich bereits für $\alpha = 0°$ ein von null verschiedener Wegunterschied $\Delta s$, welcher $\Delta s$ $(\alpha(=0°)) = d \cdot (n_0\text{-}n_e)$ beträgt. Ein solcher Wegunterschied $\Delta s(\alpha=0°)$ kann mit einem geeigneten zusätzlichen, als Kompensator wirkendem fixen doppelbrechenden Element (zum Beispiel eine planparallele Platte) im Lichtweg L ausgeglichen werden, so dass der totale Wegunterschied für $\alpha = 0°$ wieder null ist (nicht dargestellt). Dies ist vorteilhaft, weil breite Strukturen im Spektrum ("tiefe Frequenzen") nur dann aus dem fourier-transformierten Interferogramm gewonnen werden, wenn der Wegunterschied-Bereich, in welchem Lichtintensitäten für das Interferogramm gemessen werden, auch Lichtintensitäten bei kleinen Wegunterschieden $\Delta s \approx 0$ beinhaltet.

In Fig. 13a ist analog zu Fig. 3a die Situation für $\alpha \neq 0°$ im Falle eines Kristalls 5 gemäss Figs. 12a und 12b dargestellt. Fig. 13b veranschaulicht, welcher Brechungsindex welcher Polarisationsrichtung zugeordnet ist. Wird der Kristall 5 geneigt, wie in Fig. 13a dargestellt, so nähert sich der ausserordentliche "Misch"-Index n"$_e$ ausgehend von $n_e$ dem Wert von $n_0$ an. Der Wegunterschied $\Delta s$ verringert sich deshalb mit wachsendem Einfallswinkel $\alpha$. Auch hier können wieder zwei Kristalle 5,6 kombiniert werden, um den Versatz zwischen den beiden Teilstrahlen L1, L2 auszugleichen; vergleiche Fig. 6.

Weitere Anordnungen mit Kristallachsen, die für $\alpha = 0°$ nicht senkrecht zum Strahl stehen, sind realisierbar. Sie können aber einen komplizierteren Strahlverlauf zur Folge haben.

Der Einfachheit halber wurden oben nur uniaxiale Kristalle 5,6 erwähnt. Es ist aber auch möglich, erfindungsgemässe Spektrometer mit anderen doppelbrechenden Materialien für die doppelbrechenden Elemente 5,6 zu realisieren. Insbesondere sind auch zweiachsige doppelbrechende Kristalle verwendbar. Zu diesen gehören orthorhombische, monokline und trikline Kristalle. Diese weisen drei Hauptbrechzahlen $n_x$, $n_y$ und $n_z$ auf, die voneinander verschieden sind.

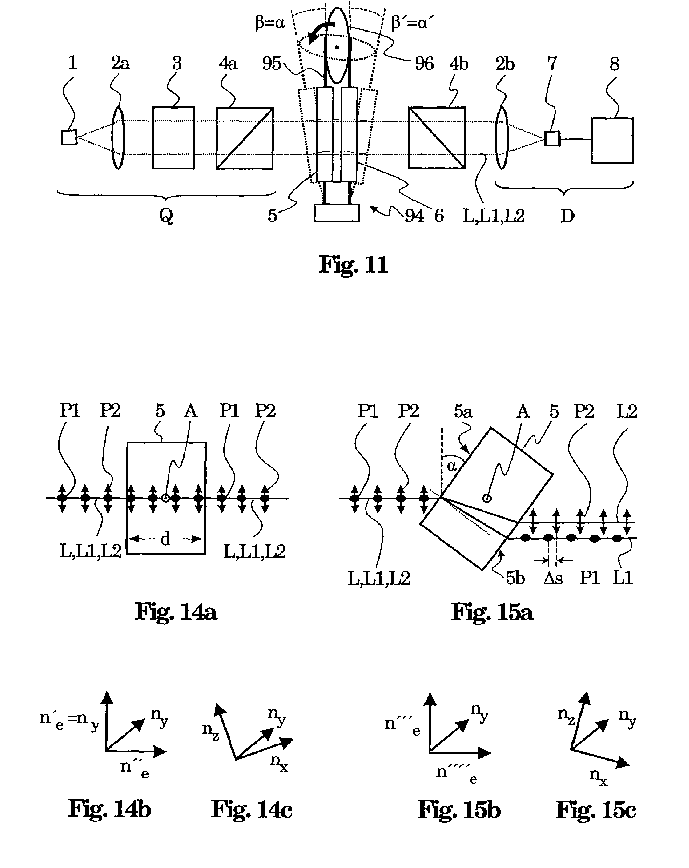

Fig. 14c veranschaulicht die Ausrichtung der drei orthogonalen Achsen der Indikatrix. Durch geschickte Wahl der kristallinen Orientierung der planparallelen Platte 5 (oder der Orientierung der Eintrittsfläche der Platte zu den Kristallrichtungen) kann der "Misch"-Brechungsindex $n'_e$, welcher von dem P2-polarisierten Teilstrahl L2 "gesehen" wird und sich aus $n_x$ und $n_z$ ergibt, vorteilhaft genau so gewählt werden, dass er genauso gross ist wie der Brechungsindex $n_y$; vergleiche dazu Figs. 14a und 14b. Wird die Anordnung entsprechend gewählt, so beträgt der Brechungsindex für beide Teilstrahlen L1,L2 $n_y$, so dass für $\alpha = 0°$ der Wegunterschied $\Delta s$ null ist. In einer solchen geschickt gewählten Konfiguration gilt also auch ohne einen zusätzlichen Kompensator $\Delta s(\alpha=0°) = 0$.

Fig. 1 5a veranschaulicht analog zu Fig. 3a den Strahlengang in einem Aufbau gemäss Fig. 14a, wenn $\alpha \neq 0°$ ist. Analog zu Figs. 14b und 3b veranschaulicht Fig. 15b die Brechungsindex-Situation des zweiachsigen doppelbrechenden Elementes 5 aus Fig. 15a. Fig. 15c veranschaulicht analog zu Fig. 14c die Achsen der Indikatrix.

Die weiter oben und im folgenden aufgeführten alternativen oder zusätzlichen Merkmale sind optional und untereinander sowie mit den in der Beschreibung dargestellten Ausführungsbeispielen beliebig kombinierbar.

Erfindungsgemässe Spektrometer können vorteilhaft zur qualitativen oder quantitativen Bestimmung von chemischen Zusammensetzungen einer Probe 3 eingesetzt. Beispiele für Einsatzbereiche von FTS sind die chemische Prozesstechnik und die petrochemische Industrie, die Nahrungsmittelindustrie, die Messung von Spurengasen, Untersuchungen der Atmosphäre, die Astrophysik und zahlreiche andere wissenschaftliche Anwendungen. Gewöhnlich wird dabei das Absorptionsspektrum der zu analysierenden Probe 3 im infraroten Wellenlängenbereich bestimmt. Es können auch Emissionsspektren von Lichterzeugern oder lichtemittierenden respektive zur Lichtemission angeregten Proben oder Spektren von von einer Probe reflektiertem Licht bestimmt werden. Vorzugsweise sind Proben gasförmig oder auch flüssig, wobei auch Festkörper und gemischte Phasen möglich sind. Messungen mit Licht L im sichtbaren Bereich oder auch im UV-Bereich sind möglich.

Es wird vorausgesetzt, dass der Fachmann mit den Einzelheiten der Fourier-Transform-Spektroskopie vertraut ist. Grundlagen dazu sind beispielsweise den bereits genannten Schriften von Griffiths und von Loewenstein entnehmbar.

Die Interferogramme, die mittels eines erfindungsgemässen FTS aufgenommen werden, sind "zeitliche" Interferogramme, das heisst: Die Lichtintensität wird als Funktion eines sich zeitlich ändernden Wegunterschiedes detektiert. Die Interferogramme werden mittels einer Fourier-Transformation in ein Spektrum transformiert. Aus dem Stand der Technik sind auch FTS bekannt, welche einen ortsaufgelösten Detektor benötigen mittels dessen ein "räumliches" Interferogramm aufgenommen wird, wobei das räumliche Interferogramm dann mittels einer Fourier-Transformation in ein Spektrum transformiert wird.

Die mittels der doppelbrechenden Elemente 5,6 erzeugten Wegunterschiede $\Delta s$ erstrecken sich stets über eine Vielzahl von Wellenlängen $\lambda$ des gemessenen Lichtes: über mindestens einige 10 $\lambda$, typischerweise ein oder mehrere 100 $\lambda$ oder 1000 $\lambda$.

Ein Lichterzeuger 1 erzeugt polychromatisches Licht L, das vorzugsweise ein breitbandiges Wellenlängenspektrum aufweist, und bevorzugt ein kontinuierliches Spektrum hat. Im Prinzip ist es aber ausreichend, wenn eine Vielzahl von Wellenlängen aufgewiesen wird.

Für die doppelbrechenden Elemente 5,6 werden vorzugsweise stark doppelbrechende Materialien eingesetzt. Unter den uniaxialen Kristallen ist Calcit (Kalkspat) besonders geeignet. Für Calcit gilt: $n_o = 1.658$ und $n_e = 1.486$. Weitere geeignete uniaxiale doppelbrechende Kristalle sind beispielsweise Korund ($n_o = 1.77$, $n_e = 1.66$), Turmalin ($n_o = 1.643$, $n_e = 1.622$) und Quarz ($n_o = 1.544$, $n_e = 1.553$). Zu den geeigneten zweiachsigen doppelbrechenden Materialien gehören Glimmer und Topas. Für Glimmer gilt: $n_x = 1.561$, $n_y = 1.594$, $n_z = 1.599$.

Anstatt, wie oben dargestellt (beispielsweise Fig. 1) im Lichtweg L erst den Kollimator 2a und dann die Probe 3 anzuordnen können diese auch in umgekehrter Reihenfolge im Lichtweg L angeordnet sein. Die Probe 3 kann auch hinter dem Analysator 4b angeordnet sein.

Der erste Polarisator 4a ist beispielsweise dann einsparbar, wenn der Lichterzeuger 1 oder die Probe 3 bereits polarisiertes Licht emittiert.

Die doppelbrechenden Elemente 5,6 sind vorteilhaft einstückig ausgebildet. Es können auch drei oder vier oder mehr doppelbrechende Elemente im Strahlengang angeordnet sein oder auch zwei oder drei oder mehr Paare doppelbrechender Elemente vorgesehen sein, die vorzugsweise jeweils einen entstehenden Strahlversatz kompensieren.

Wenn ein Paar von doppelbrechenden Elementen 5,6 vorgesehen ist, können diese auch unterschiedliche Dicken d,d' aufweisen und/oder aus unterschiedlichen Materialien bestehen. Der Drehwinkel β kann durchaus auch verschieden sein von dem Einfallswinkel α. Insbesondere ist es mit Vorteilen auch möglich, das doppelbrechende Element 5 derart im Lichtweg L anzuordnen, dass es mit dem Lichtstrahl L einen von null verschiedenen minimalen Einfallswinkel $\alpha_{min}$ einschliesst, der hier als φ bezeichnet werden soll. Um $\Delta S(\alpha=\alpha_{min}) = 0$ zu erhalten kann, wie oben im Zusammenhang mit Fig. 12 beschrieben, ein als Kompensator dienendes fixes doppelbrechendes Element in den Lichtweg L eingebracht werden. Vorteilhaft verläuft die Drehachse A senkrecht zum Lichtweg L; oder die Drehachse A verläuft parallel zur Eintrittsfläche 5a. In diesen Fällen kann zur Erzeugung eines vorgebbaren maximalen Wegunterschiedes Δs ein doppelbrechendes Element 5 von geringerer Dicke d eingesetzt werden als in den in den Figuren dargestellten Ausführungsformen, da effektiv die Dicke des doppelbrechenden Elementes vergrössert ist. Analog verhält es sich im Falle zweier doppelbrechender Elemente 5,6.

Die genannten Merkmale können gemeinsam oder auch einzeln oder in beliebiger Kombination vorteilhaft sein.

Bezugszeichenliste

| | |
|---|---|
| 1 | Lichterzeuger |
| 2a | Kollimator |
| 2b | Kollimator |
| 3 | Probe |
| 4a | erster Polarisator |
| 4b | Analysator, als Analysator wirkender Polarisator |
| 5 | erstes doppelbrechendes Element |
| 5a | Eintrittsfläche des ersten doppelbrechenden Elementes |
| 5a' | weitere Eintrittsfläche des ersten doppelbrechenden Elementes |
| 5b | Austrittsfläche des ersten doppelbrechenden Elementes |
| 5b' | weitere Austrittsfläche des ersten doppelbrechenden Elementes |
| 6 | zweites doppelbrechendes Element |
| 6a | Eintrittsfläche des zweiten doppelbrechenden Elementes |
| 6a' | weitere Eintrittsfläche des zweiten doppelbrechenden Elementes |
| 6b | Austrittsfläche des zweiten doppelbrechenden Elementes |
| 6b' | weitere Austrittsfläche des zweiten doppelbrechenden Elementes |
| 7 | Detektor, Photodiode |
| 8 | Signalverarbeitung, Rechner, Elektronik |
| 9 | Mittel zur Veränderung des Einfallswinkels |
| 91 | Plattenhalterung |
| 92 | Stange |
| 93 | Antrieb |
| 94 | elastische Halterung(en) und Fixierung |
| 95 | Auslenkstange |
| 96 | Exzenter |
| A,A' | Drehachsen |
| d | Dicke des ersten doppelbrechenden Elementes |
| d' | Dicke des zweiten doppelbrechenden Elementes |
| D | Detektions-Auswerte-Einheit |
| $n_0$ | ordentlicher Brechungsindex |
| $n_e$ | ausserordenttlicher Brechungsindex |
| $n'_e, n''_{e...}$ | "Misch"-Brechungsindices |
| $n_x,n_y,n_z$ | Brechungsindices, Hauptbrechzahlen eines zweiachsigen Kristalls |
| L | Licht, Lichtstrahl, Lichtweg |
| L1 | erster Teilstrahl, mit erster Polarisation |
| L2 | zweiter Teilstrahl, mit zweiter Polarisation |
| P1 | erste Polarisation |
| P2 | zweite Polarisation |
| Q | Lichtquelle |

$\alpha,\alpha'$      Einfallswinkel
$\beta,\beta'$      Drehwinkel
$\Delta s,\Delta s'$     Wegunterschiede zwischen den Teilstrahlen

**Patentansprüche**

1. Spektrometer umfassend

   - eine Lichtquelle (Q) zur Erzeugung eines einen Lichtweg (L) beschreibenden Lichtstrahles (L) aus kollimiertem polychromatischen Licht (L), aufweisend zwei Teilstrahlen (L1,L2) orthogonaler linearer Polarisationen (P1,P2),
   - mindestens ein erstes doppelbrechendes Element (5) mit einer Eintrittsfläche (5a) und einer zu der Eintrittsfläche (5a) parallelen Austrittsfläche (5b), wobei der Lichtstrahl (L) mit der Flächennormalen der Eintrittsfläche (5a) einen Einfallswinkel $\alpha$ einschliesst,
   - einen als Analysator (4b) wirkenden Polarisator (4b), welcher auf dem Lichtweg (L) nach dem mindestens einen ersten doppelbrechenden Element (5) angeordnet ist, und
   - eine Detektions-Auswerte-Einheit (D) zur Detektion des Lichtes (L; L1,L2), zur Erzeugung eines Interferogramms durch Messung der Intensität des Lichtes als Funktion eines Wegunterschiedes $\Delta s$ zwischen den zwei Teilstrahlen (L1 ,L2) und zur Bestimmung eines Spektrums mittels einer Fourier-Transformation des Interferogramms,

   **dadurch gekennzeichnet, dass**
   mindestens ein Mittel (9) zur Veränderung des Einfallswinkels $\alpha$ vorgesehen ist.

2. Spektrometer gemäss Anspruch 1, **dadurch gekennzeichnet, dass** der Einfallswinkel $\alpha$ zur Erzeugung eines Wegunterschiedes $\Delta s$ zwischen den zwei Teilstrahlen (L1 ,L2) veränderbar ist.

3. Spektrometer gemäss Anspruch 1 oder 2, **dadurch gekennzeichnet, dass** das mindestens eine erste doppelbrechende Element (5) im wesentlichen ein uniaxialer doppelbrechender Kristall ist, dessen optische Achse senkrecht zur Eintrittsfläche (5a) ausgerichtet ist.

4. Spektrometer gemäss einem der vorangegangenen Ansprüche, **dadurch gekennzeichnet, dass** das mindestens eine erste doppelbrechende Element (5) mittels des Mittels (9) zur Veränderung des Einfallswinkels $\alpha$ kippbar oder drehbar ist, und insbesondere um eine Drehachse (A) kippbar oder drehbar ist, welche senkrecht zu dem Lichtstrahl (L) und/oder parallel zu der Eintrittsfläche (5a) ausgerichtet ist.

5. Spektrometer gemäss einem der vorangegangenen Ansprüche, **dadurch gekennzeichnet, dass** mindestens ein zweites doppelbrechendes Element (6) mit einer Eintrittsfläche (6a) und einer zu der Eintrittsfläche (6a) parallelen Austrittsfläche (6b) vorgesehen ist, welches auf dem Lichtweg (L) zwischen dem ersten doppelbrechenden Element (5) und dem als Analysator (4b) wirkenden Polarisator (4b) angeordnet ist, wobei der Lichtstrahl (L) mit der Flächennormale der Eintrittsfläche (6a) einen Einfallswinkel $\alpha'$ einschliesst.

6. Spektrometer gemäss Anspruch 5, **dadurch gekennzeichnet, dass** das mindestens eine zweite doppelbrechende Element (6) gleichartige optische Eigenschaften aufweist wie das erste doppelbrechende Element (5).

7. Spektrometer gemäss einem der Ansprüche 5 oder 6, **dadurch gekennzeichnet, dass** das zweite doppelbrechende Element (6) bezüglich einer zwischen den beiden doppelbrechenden Elementen (5,6) angeordneten und zu dem Lichtstrahl (L) senkrecht ausgerichteten Symmetrieebene spiegelbildlich angeordnet ist, und insbesondere

   - wobei das erste doppelbrechende Element (5) um eine erste Drehachse (A) und das zweite doppelbrechende Element (5) um eine zweite Drehachse (A') kippbar oder drehbar ist,
   - wobei die beiden Drehachsen (A,A') bezüglich der genannten Symmetrieebene spiegelbildlich angeordnet sind, und
   - wobei mittels des Mittels (9) zur Veränderung des Einfallswinkels $\alpha$ die beiden doppelbrechenden Elemente (5,6) derart kippbar oder drehbar sind, dass der Lichtstrahl (L) mit der Flächennormalen der Eintrittsfläche (6a) des zweiten doppelbrechenden Elementes (6) einen Einfallswinkel $\alpha' = -\alpha$ einschliesst.

8. Spektrometer gemäss einem der Ansprüche 4 bis 7, **dadurch gekennzeichnet, dass** die doppelbrechenden Elemente (5,6) mittels des Mittels (9) zur Veränderung des Einfallswinkels α nach Art einer Stimmgabel in gegenphasige Schwingungen versetzbar sind.

9. Spektrometer gemäss einem der Ansprüche 4 bis 7, **dadurch gekennzeichnet, dass** die doppelbrechenden Elemente (5,6) mittels des Mittels (9) zur Veränderung des Einfallswinkels α um jeweils eine Drehachse (A;A') um unbegrenzte Winkel rotierbar sind, wobei die beiden Drehachsen (A;A') jeweils durch das entsprechende doppelbrechende Element (5,6) verlaufen, insbesondere wobei die Drehachsen (A;A') durch den Schwerpunkt des jeweiligen doppelbrechenden Elementes (5,6) verlaufen.

10. Spektrometer gemäss einem der vorangegangenen Ansprüche, **dadurch gekennzeichnet, dass** die Lichtquelle (Q) einen Lichterzeuger (1), einen Kollimator (2a), eine Probe (3) und einen ersten Polarisator (4a) aufweist, wobei die Probe (3) im Lichtweg (L) zwischen dem Kollimator (2a) und dem ersten Polarisator (4a) angeordnet ist, insbesondere wobei das optische Spektrum ein Absorptionsspektrum der Probe (3) ist.

11. Verfahren zur Bestimmung eines optischen Spektrums, wobei ein Lichtstrahl (L) parallelen polychromatischen Lichts (L), aufweisend zwei Teilstrahlen (L1,L2) orthogonaler linearer Polarisationen (P1,P2), erzeugt wird, wobei mindestens ein erstes doppelbrechendes Element (5), welches eine Eintrittsfläche (5a) sowie eine zu der Eintrittsfläche (5a) parallele Austrittsfläche (5b) aufweist, von dem Lichtstrahl (L) durchstrahlt wird, wobei von dem Lichtstrahl (L) und der Flächennormale der Eintrittsfläche (5a) ein Einfallswinkel α eingeschlossen wird, wobei von dem Lichtstrahl (L) nach Austritt aus der Austrittsfläche (5b) ein als Analysator (4b) wirkender Polarisator (4b) durchlaufen wird, und wobei mittels einer Detektions-Auswerte-Einheit (D)

- der Lichtstrahl (L) nach Austritt aus dem als Analysator (4b) wirkenden Polsarisator (4b) detektiert wird,
- ein Interferogramm erzeugt wird, indem die detektierte Intensität des Lichtstrahles (L) als Funktion eines Wegunterschiedes As zwischen den zwei Teilstrahlen (L1,L2) gemessen wird,
- das optische Spektrum bestimmt wird, indem das Interferogramm fourier-transformiert wird,

**dadurch gekennzeichnet,**
**dass** der Einfallswinkel α verändert wird, und
**dass** durch die Veränderung des Einfallswinkels α der Wegunterschied Δs verändert wird.

**Fig. 1**

**Fig. 4**

**Fig. 7**

P1   P2      5   A   P1   P2

L,L1,L2          d          L,L1,L2

**Fig. 2a**

P1   P2   5a   A   5   P2   L2

α

L,L1,L2

5b   Δs   P1   L1

**Fig. 3a**

x

$n_0$   y

$n_0$   z

$n_e$

**Fig. 2b**

x

$n'_e$   y

$n_0$   z

$n''_e$

**Fig. 3b**

$n_0 = 1.658$
$n_e = 1.486$
$d = 10$ mm

Δs (μm)

α (°)

**Fig. 5**

**Fig. 6**

**Fig. 8**

**Fig. 9**

**Fig. 10**

**Fig. 12a**

**Fig. 13a**

**Fig. 12b**

**Fig. 13b**

β=α    β´=α´

1   2a   3   4a   95   96   4b   2b   7   8

Q   5   94  6   L,L1,L2   D

**Fig. 11**

P1   P2   5   A   P1   P2

L,L1,L2   d   L,L1,L2

**Fig. 14a**

P1   P2   5a   A   5   P2   L2

α

L,L1,L2   5b   Δs   P1   L1

**Fig. 15a**

$n´_e = n_y$   $n_y$   $n_z$   $n_y$

$n''_e$   $n_x$

**Fig. 14b**    **Fig. 14c**

$n'''_e$   $n_y$   $n_z$   $n_y$

$n''''_e$   $n_x$

**Fig. 15b**    **Fig. 15c**

| | **Europäisches Patentamt** | **EUROPÄISCHER RECHERCHENBERICHT** | **Nummer der Anmeldung** EP 03 40 5373 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 222 632 B1 (BAKIN DMITRY V) 24. April 2001 (2001-04-24) * Zusammenfassung * * Spalte 4, Zeile 13 - Spalte 5, Zeile 30 * * Spalte 6, Zeile 28 - Zeile 56 * * Abbildungen 1,2 * --- | 1-11 | G01J3/45 G01B9/02 |
| X | US 5 191 392 A (JOHNSON JOHN L) 2. März 1993 (1993-03-02) * Seite 1, Zeile 20 - Zeile 46 * * Spalte 2, Zeile 34 - Zeile 51 * * Spalte 4, Zeile 23 - Zeile 58 * * Abbildung 6 * --- | 1,2,4, 10,11 | |
| A | US 5 013 153 A (DISCH ROLF ET AL) 7. Mai 1991 (1991-05-07) * Zusammenfassung * * Spalte 3, Zeile 52 - Spalte 4, Zeile 17 * * Abbildung 1 * --- | 10 | |
| D,A | US 5 157 458 A (GLAUS ULRICH ET AL) 20. Oktober 1992 (1992-10-20) * Spalte 1, Zeile 59 - Spalte 2, Zeile 41 * * Spalte 3, Zeile 6 - Spalte 4, Zeile 54 * * Abbildungen 1,2 * ----- | 1-11 | **RECHERCHIERTE SACHGEBIETE (Int.Cl.7)** G01J G01B |

Der vorliegende Recherchenbericht wurde für alle Patentansprüche erstellt

| Recherchenort | Abschlußdatum der Recherche | Prüfer |
|---|---|---|
| MÜNCHEN | 14. Oktober 2003 | Haller, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 03 40 5373

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 6222632 | B1 | 24-04-2001 | KEINE | | |
| US 5191392 | A | 02-03-1993 | KEINE | | |
| US 5013153 | A | 07-05-1991 | DE | 3825683 C1 | 28-12-1989 |
| | | | AT | 99049 T | 15-01-1994 |
| | | | DE | 58906480 D1 | 03-02-1994 |
| | | | EP | 0354298 A2 | 14-02-1990 |
| | | | JP | 2075936 A | 15-03-1990 |
| | | | PT | 91320 A ,B | 08-02-1990 |
| US 5157458 | A | 20-10-1992 | AT | 111591 T | 15-09-1994 |
| | | | WO | 9010191 A1 | 07-09-1990 |
| | | | DE | 59007132 D1 | 20-10-1994 |
| | | | DK | 427797 T3 | 17-10-1994 |
| | | | EP | 0427797 A1 | 22-05-1991 |
| | | | EP | 0605391 A2 | 06-07-1994 |
| | | | ES | 2061011 T3 | 01-12-1994 |
| | | | JP | 3504643 T | 09-10-1991 |

EPO FORM P0461

Für nähere Einzelheiten zu diesem Anhang : siehe Amtsblatt des Europäischen Patentamts, Nr.12/82